# EUROPEAN PATENT SPECIFICATION

(11) **EP 2 481 657 B1**
(45) Date of publication and mention of the grant of the patent: **30.08.2017**
(21) Application number: 12152179.3
(22) Date of filing: 23.01.2012
(51) Int. Cl.: B62J 17/02

(54) **Saddle-ride type vehicle**
Fahrzeug mit Sattel
Véhicule à monture de selle

(30) Priority: 27.01.2011 JP 2011014676
(43) Date of publication of application: 01.08.2012
(73) Proprietor: Honda Motor Co., Ltd., Tokyo 107-8556 (JP)
(72) Inventor: Inoue, Taishi, Saitama, 351-0193 (JP); Hayashi, Kanji, Saitama, 351-0193 (JP); Nakanishi, Ryuichi, Saitama, 351-0193 (JP); Takahashi, Daisuke, Saitama, 351-0193 (JP)
(74) Representative: Ilgart, Jean-Christophe

(56) References cited:
- EP-A2- 0 248 619
- JP-U- S6 116 924
- JP-U- S49 123 439

## Description

### [Technical Field]

The present invention relates to a saddle-ride type vehicle provided with a radiator cover on a side of a radiator.

### [Background Art]

With respect to motorcycles, there has been disclosed the structure where left and right sides of a vehicle body are covered with a cowl, a radiator is arranged inside the cowl and behind left and right front forks, and an opening portion is formed in the cowl at positions where the cowl overlaps with the radiator as viewed in a side view (see patent document 1, for example).

### [Prior Art Document]

[Patent Document 1] Japanese Patent 4509605

### [Summary of the Invention]

### [Problems that the Invention is to solve]

In the conventional structure, the opening portions are formed in the cowl as viewed in a side view and hence, wind passes the vehicle in the lateral direction through the opening portions when the vehicle is inclined leftwardly or rightwardly whereby the steerability can be enhanced.

Another known structure, corresponding to the preamble of claim 1, is described in prior art document EP-A-0248619. However, in the known structures, the radiator per se has not been used for enhancing steerability.

The present invention has been made in view of the above-mentioned circumstances, and it is an object of the present invention to provide a saddle-ride type vehicle which can enhance steerability thereof by making use of a radiator with the constitution where opening portions are formed in a radiator cover at positions where opening portions overlap the radiator as viewed in a side view.

### [Means for solving the Problem]

To overcome the above-mentioned drawbacks, there is provided a saddle-ride type vehicle having the features defined in claim 1. According to this constitution, the radiator cover includes the front cover portion which extends in the longitudinal direction of the vehicle body in front of and in the vicinity of the opening portion formed at the position where the opening portion overlaps the radiator as viewed in a side view, and the front cover portion is arranged inside the side portion of the radiator in the vehicle widthwise direction thus forming the stepped portion between the front cover portion and the side portion of the radiator. Accordingly, a traveling wind which flows around the radiator flows rearwardly along the front cover portion and, thereafter, impinges on the side portion of the radiator so that a turbulent flow is generated whereby the traveling wind can be peeled off. Accordingly, a manipulation force at the time of inclining the vehicle body leftwardly or rightwardly can be decreased by making use of the radiator thus enhancing steerability.

In the above-mentioned constitution, the front cover portion (63A) may have a stepped portion (66) which is indented more inwardly in the vehicle widthwise direction than the opening portion (63B). Due to such a constitution, a step between the front cover portion and the side portion of the radiator can be increased thus accelerating the peeling-off of a traveling wind.

Further, in the above-mentioned constitution, the radiator cover (61) may include a rear cover portion (63C) which extends along the longitudinal direction of the vehicle body behind and in the vicinity of the opening portion (63B), and the rear cover portion (63C) may include a bulging portion (67) which bulges more outwardly in the vehicle widthwise direction than the side portion of the radiator (51). Due to such a constitution, it is possible to peel off the traveling wind by generating a turbulent flow also by the bulging portion of the rear cover portion and hence, the steerability can be further enhanced.

In the above-mentioned constitution, the rear cover portion (63C) may include a wind vent opening portion (63E) behind the opening portion (63B) and within a vertical width of the opening portion (63B). Due to such a constitution, it is possible to smoothly vent a traveling wind which enters inside the rear cover portion to the outside of the vehicle.

Further, in the above-mentioned constitution, a slit (S1) which extends vertically as viewed in a side view may be formed between a front edge of the opening portion (63B) and a front edge of the radiator (51). Due to such a constitution, steerability can be enhanced by the slit while using the cover in front of the opening portion formed in the radiator cover as a wind guide plate for the radiator.

Further, in the above-mentioned constitution, the radiator cover (61) may include a rib portion (63D) which passes outside the radiator (51) in the vehicle widthwise direction and connects the front cover portion (63A) in front of the opening portion (63B) and a portion behind the opening portion (63B) to each other. Due to such a constitution, the rigidity of the radiator cover can be enhanced, and the protection property of the radiator cover for the radiator can be enhanced.

### [Advantageous effect of the Invention]

According to the present invention, the radiator cover includes the front cover portion which extends in the longitudinal direction of the vehicle body in front of and in the vicinity of the opening portion formed in the radiator cover at a position where the opening portion overlaps the radiator as viewed in a side view, and the front cover portion is arranged inside the side portion of the radiator in the vehicle widthwise direction thus forming the stepped portion between the front cover portion and the side portion of the radiator and hence, a traveling wind from a front side of the vehicle body flows rearwardly along the front cover portion and, thereafter, impinges on the side portion of the radiator so that a turbulent flow is generated by the stepped portion between the front cover portion and the side portion of the radiator whereby the traveling wind can be peeled off. Due to such a constitution, a manipulation force at the time of inclining the vehicle body leftwardly or rightwardly can be decreased by making use of the radiator thus enhancing steerability.

Further, the front cover portion has the stepped portion which is indented more inwardly in the vehicle widthwise direction than the opening portion and hence, the step between the front cover portion and the side portion of the radiator can be increased thus accelerating the peeling-off of a traveling wind.

Further, the radiator cover includes the rear cover portion which extends along the longitudinal direction of the vehicle body behind and in the vicinity of the opening portion, and the rear cover portion includes the bulging portion which bulges more outwardly in the vehicle widthwise direction than the side portion of the radiator and hence, it is possible to peel off the traveling wind by generating a turbulent flow also by the bulging portion of the rear cover portion whereby the steerability can be further enhanced.

Further, the rear cover portion includes the wind vent opening portion behind the opening portion and within a vertical width of the opening portion and hence, it is possible to smoothly vent a traveling wind which enters inside the rear cover portion to the outside of the vehicle.

Further, the slit which extends vertically as viewed in a side view is formed between the front edge of the opening portion and the front edge of the radiator and hence, steerability can be enhanced by the slit while using the cover in front of the opening portion formed in the radiator cover as the wind guide plate for the radiator.

Further, the radiator cover includes the rib portion which passes outside the radiator in the vehicle widthwise direction and connects the front cover portion in front of the opening portion and the portion behind the opening portion to each other and hence, the rigidity of the radiator cover can be enhanced, and the protection property of the radiator cover for the radiator can be enhanced.

### [Brief Description of the Drawings]

Fig. 1 is a left side view of a motorcycle according to an embodiment of the present invention.
Fig. 2 is a left side view showing a radiator together with the constitution around the radiator.
Fig. 3 is a front view showing the radiator together with the constitution around the radiator.
Fig. 4(A) is a top plan view of the radiator, Fig. 4(B) is a view of a left half portion of the radiator as viewed from a back surface side of the radiator, and Fig. 4(C) is a view of a right half portion of the radiator as viewed from the back surface side of the radiator.
Fig. 5 is a cross-sectional view taken along a line V-V in Fig. 2.
Fig. 6 is a left side view showing a mounting state of a side trunk together with the constitution around the side trunk.

### [Mode for carrying out the Invention]

Hereinafter, one embodiment of the present invention is explained in conjunction with drawings. Here, in the explanation, assume that the description relating to directions such as "frontward" and "rearward", "leftward" and "rightward", and "upward" and "downward" are equal to the directions of a vehicle body unless otherwise specified.

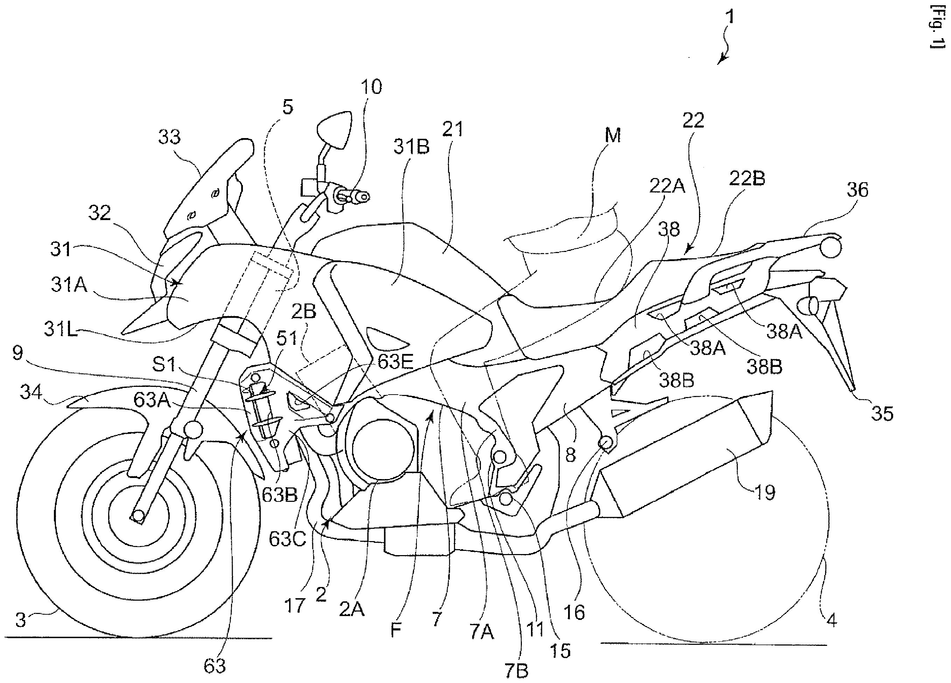

Fig. 1 is a left side view of a motorcycle according to an embodiment of the present invention. In Fig. 1, for facilitating the understanding of the explanation, a rear wheel 4 and the structure around the rear wheel 4 are shown in a simplified manner.

The motorcycle 1 is a saddle-ride-type vehicle where an engine (power unit) 2 is mounted on an approximately center portion of a vehicle body in the longitudinal direction, a front wheel 3 is arranged in front of the engine 2, and the rear wheel 4 is arranged behind the engine 2.

A vehicle body frame F includes a head pipe 5 which is mounted on a front portion of the vehicle body, a pair of left and right main frames 7 which extends rearwardly and downwardly from the head pipe 5, and a rear frame 8 which extends rearwardly and upwardly toward a rear portion of the vehicle body from rear portions of the main frames 7.

Each main frame 7 includes a main tube 7A which extends rearwardly and downwardly from a rear portion of the head pipe 5, and a center tube 7B which is bent from a rear end of the main tube 7A and extends downwardly.

A pair of left and right front forks 9 is steerably supported on the head pipe 5 by way of a steering shaft (not shown in the drawing) in the lateral direction, and the front wheel 3 is rotatably supported on lower portions of the front forks 9. A steering handle 10 is mounted on upper portions of the front forks 9.

A swing arm (not shown in the drawing) is swingably supported on the center tube 7B by way of a pivot shaft 11 which extends in the vehicle widthwise direction, and the rear wheel 4 is supported on a rear portion of the swing arm. Further, a pair of left and right main steps 15 on which a rider M places his feet is supported on a lower portion of the center tube 7B, and a pair of left and right pillion steps 16 on which a pillion sitting on a position behind the rider M places his feet is supported on the rear frame 8.

The engine 2 is supported on lower portions of the main frames 7 (lower portions of the main tubes 7A and front portions of the center tubes 7B), and the engine 2 includes a cylinder portion 2B which is mounted on a front portion of a crankcase 2A of the engine 2 in an upright manner. An exhaust pipe 17 is connected to the cylinder portion 2B, and the exhaust pipe 17 extends rearwardly after passing a space below the crankcase 2A and is connected to a muffler 19 which is arranged on one side of the rear wheel 4. The rear wheel 4 is joined to the engine 2 by way of a power transmission mechanism (not shown in the drawing) and is driven by the engine 2.

A fuel tank 21 is supported on upper portions of the main tubes 7A, and a seat 22 on which occupants sit extends rearwardly in a state where the seat 22 is formed contiguously with a rear portion of the fuel tank 21 and is supported on the rear frame 8. The seat 22 is formed into an integral-type seat where a front seat 22A on which the rider M sits and a rear seat 22B on which a pillion sits are continuously and integrally formed with each other in the longitudinal direction.

Left and right sides of a front portion of the vehicle body frame F are covered with a pair of left and right front side covers 31 which constitutes a vehicle body cowl (cowl member). The front side covers 31 include front-side front side covers 31A which cover the head pipe 5 and left and right sides of the front portion of the vehicle body frame F, and rear-side front side covers 31B which are contiguously formed with rear edges of the front-side front side covers 31A and cover the fuel tank 21 and left and right sides of an intermediate portion of the vehicle body frame F.

The front-side front side covers 31A have an approximately triangular shape where a vertical width of the front-side front side covers 31A is gradually increased as the front-side front side covers 31A extend rearwardly from side portions of headlight 32 which is arranged in front of the head pipe 5, lower edges 31L of the front-side front side covers 31A extend rearwardly while being curved in an upwardly projecting manner, and rear ends of the front-side front side covers 31A are positioned on a front upper portion of the engine 2 as viewed in a side view. Further, the rear-side front side covers 31B have an approximately triangular shape where a vertical width of the rear-side front side covers 31B is decreased as the rear-side front side covers 31B extend rearwardly, and rear portions of the rear-side front side cover 31B also function as knee pad covers which are sandwiched by knees of the rider M from left and right sides.

Further, a wind screen 33 which extends rearwardly and upwardly is arranged above the headlight 32 which is arranged between the left and right front-side front side covers 31A. Further, a front fender 34 is mounted on the front forks 9, and a rear fender 35 and a carrier 36 which includes a pair of left and right grab rails which a pillion grasps as integral parts thereof are mounted on a rear portion of the vehicle body frame F.

The engine 2 of the motorcycle 1 is a water-cooled-type engine (internal combustion engine). A radiator 51 for cooling engine cooling water which circulates the inside of the engine 2 is supported on the vehicle body frame F (main tubes 7A) in front of the cylinder portion 2B of the engine 2. To be more specific, the radiator 51 is arranged at a position behind the front wheel 3, in front of the cylinder portion 2B of the engine 2 and in the vicinity of a lower end of the head pipe 5.

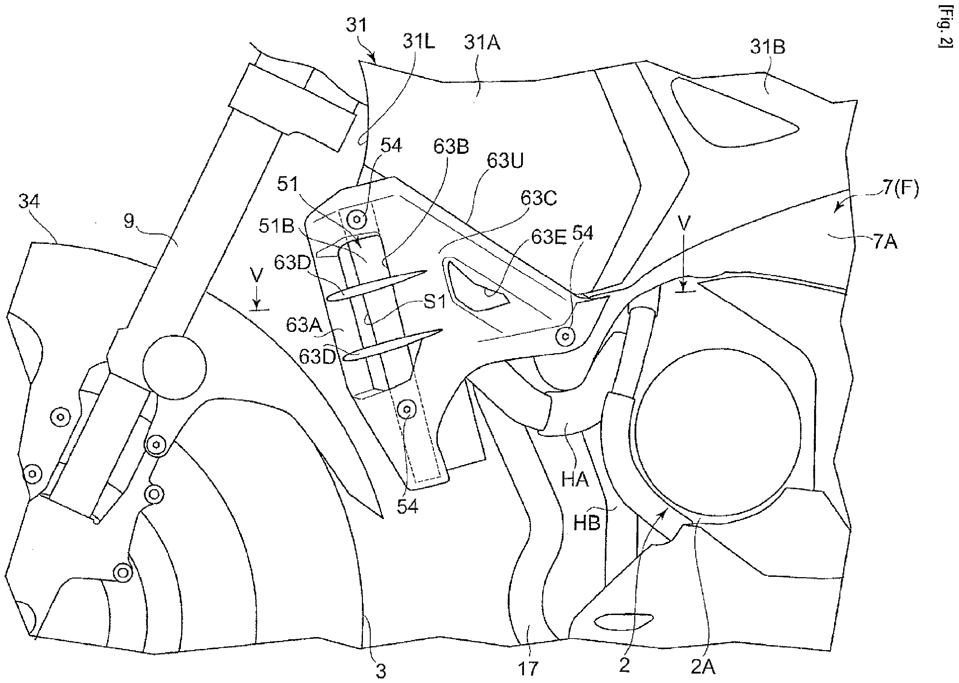

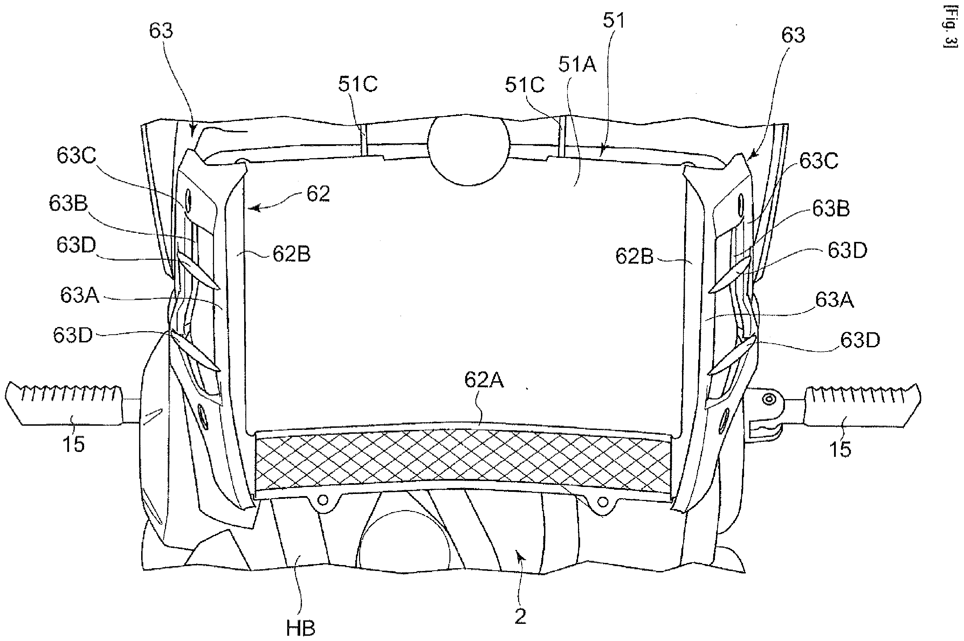

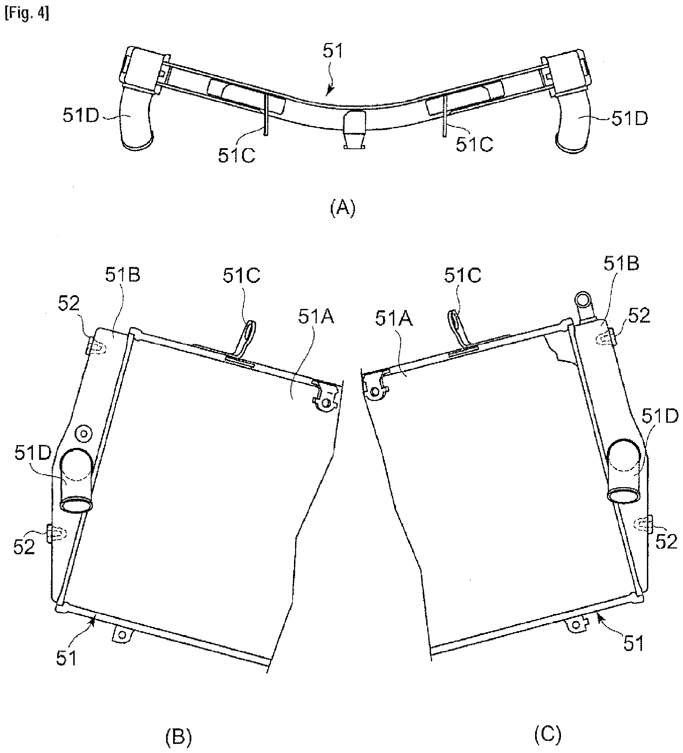

Fig. 2 is a left side view showing the radiator 51 together with the constitution around the radiator 51, Fig. 3 is a front view showing the radiator 51 together with the constitution around the radiator 51, and Fig. 4(A) to Fig. 4(C) are views showing only the radiator 51 as a single part. Here, Fig. 4(A) is a top plan view of the radiator 51, Fig. 4(B) is a view showing a left half portion of the radiator 51 as viewed from a back surface side of the radiator 51, and Fig. 4(C) is a view showing a right half portion of the radiator 51 as viewed from the back surface side of the radiator 51.

The radiator 51 is a fin-tube-type radiator having a gap through which a traveling wind passes in the longitudinal direction. As shown in Fig. 2 to Fig. 4, the radiator 51 includes a core portion 51A where heat exchange is performed between cooling water and a traveling wind, and a pair of left and right tank portions 51B which is arranged on left and right side portions of the core portion 51A and is formed integrally with the core portion 51A.

The radiator 51 has a laterally elongated rectangular shape as viewed in a front view and has a V shape opening in the frontward direction of the vehicle body as viewed in a top plan view (see Fig. 4(A)), is supported on the vehicle body frame F (main tubes 7A) by way of stays 51C which are mounted on an upper surface of the radiator 51, and is arranged at a position in the vicinity of the lower edge 31L of the front-side front side cover 31A as viewed in a side view (see Fig. 2).

Further, the radiator 51 has a left-and-right symmetrical shape. The radiator 51 is arranged such that the center of the radiator 51 in the vehicle widthwise direction is aligned with the center of the motorcycle 1 in the vehicle widthwise direction, and the radiator 51 is arranged to overlap the cylinder portion 2B (see Fig. 1) as viewed in a front view. Here, pipe portions 51D to which cooling water pipes HA, HB (see Fig. 2) from the engine 2 are connected are respectively formed on vertically center portions of the tank portions 51B on back surfaces of the tank portions 51B. Further, in Fig. 4(B) and Fig. 4(C), symbol 52 indicates a pair of upper and lower embedded nuts which is mounted on side surfaces of the tank portion 51B (outer surfaces of the tank portion 51B in the vehicle widthwise direction).

In this constitution, as shown in Fig. 2 and Fig. 3, a resin-made radiator cover 61 which covers sides of the radiator 51 is arranged. The radiator cover 61 includes an inner cover 62 which has a radiator grill 62A covering a front surface of the radiator 51 as an integral part thereof and a pair of left and right outer covers 63 which is arranged outside the inner cover 62 and covers the sides of the radiator 51. The inner cover 62 and the outer covers 63 are formed into a left-and-right symmetrical shape. Here, the respective covers 62, 63 are not limited to resin-made covers and may be metal-made covers.

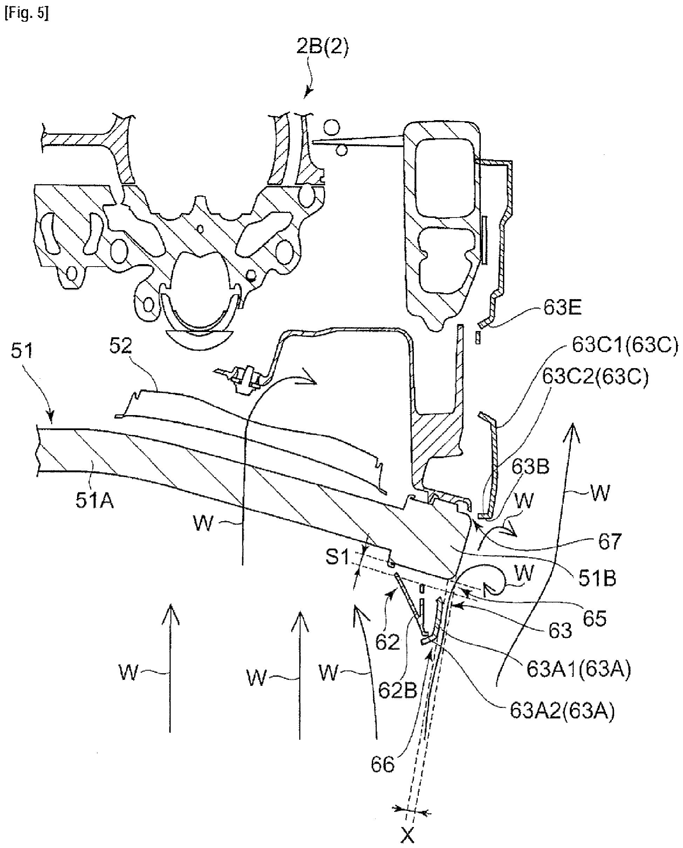

Fig. 5 shows a cross section (horizontal cross section) taken along a line V-V in Fig. 2. In Fig. 5, symbol 52 indicates a radiator fan arranged behind and in the vicinity of the radiator 51.

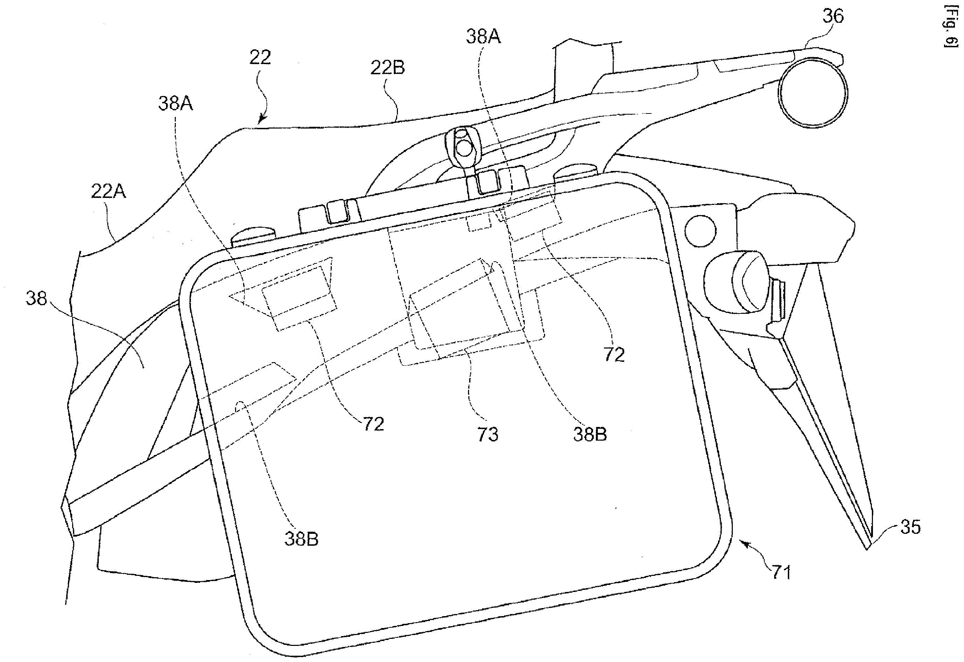

As shown in Fig. 3 and Fig. 5, the inner cover 62 includes a pair of left and right cover portions 62B which extends in the longitudinal direction of the vehicle body in front of the pair of left and right tank portions 51B of the radiator 51. The pair of left and right cover portions 62B extends between an upper end and a lower end of the tank portion 51B at positions in the vicinity of front surfaces of the tank portions 51B, and is formed into an inclined plate shape such that the cover portions 62B expand outwardly in the vehicle widthwise direction as the cover portions 62B extend toward a front side of the vehicle body (see Fig. 5). Accordingly, as shown in Fig. 5, a traveling wind oncoming to the tank portions 51B from a front side of the vehicle body (indicated by symbol W in Fig. 6) is guided toward the core portion 51A arranged inside the tank portions 51B by the pair of left and right cover portions 62B.

Further, as shown in Fig. 3, lower portions of the pair of left and right cover portions 62B are connected to each other by the radiator grill 62A and hence, the radiator grill 62A can be also used as a reinforcing member for reinforcing the inner cover 62.

As shown in Fig. 2, the pair of left and right outer covers 63 has a triangular shape as viewed in a side view where a vertical width of the outer cover 63 is gradually decreased as the outer cover 63 extends rearwardly as viewed in a side view, and a front upper portion, a front lower portion and a rear end portion of the outer cover 63 which correspond to three corner portions of the outer cover 63 are respectively fixed to the tank portions 51B (embedded nuts 52) of the radiator 51 and the vehicle body frame F (main tubes 7A) by way of bolts 54. When the outer covers 63 are mounted on the vehicle body in such a manner, a rear upper edge 63U of the outer cover 63 is contiguously formed with a lower edge 31L of the front side cover 31 (front-side front side cover 31A) so that the outer covers 63 are configured to be integrally formed with the front side covers 31 which cover the left and right sides of the front portion of the vehicle body.

As shown in Fig. 2 and Fig. 3, the outer covers 63 are covers provided for covering outer sides of the inner cover 62 and the radiator 51 in the vehicle widthwise direction, and are formed into the cover structure where the outer covers 63 gradually expand outwardly in the vehicle widthwise direction as the outer covers 63 extend toward a rear side of the vehicle body so as to cover the outer sides of the radiator 51 in the vehicle widthwise direction between an upper end and a lower end of the radiator 51.

The outer cover 63 includes, as integral parts thereof, a front cover portion 63A which extends in the longitudinal direction of the vehicle body in front of and in the vicinity of the radiator 51, an opening portion 63B which is contiguously formed with a rear end of the front cover portion 63A and opens at a position where the opening portion 63B and the radiator 51 overlap each other as viewed in a side view, and a rear cover portion 63C which is contiguously formed with a rear end of the opening portion 63B and extends in the longitudinal direction of the vehicle body behind and in the vicinity of the radiator 51. The outer cover 63 constitutes a large-sized radiator cover which straddles the radiator 51 in the longitudinal direction as viewed in a side view.

The opening portion 63B forms a vertically-elongated large opening portion which extends between a front upper portion and a front lower portion where the outer cover 63 and the radiator 51 are connected to each other using bolts. Due to the formation of the large opening portion, the large-sized radiator cover 61 can be light-weighted and, at the same time, as shown in Fig. 5, the tank portions 51B of the radiator 51 can be exposed to the outside in the vehicle widthwise direction.

Further, a pair of upper and lower rib portions 63D (see Fig. 2) which passes outside the radiator 51 in the vehicle widthwise direction and connects the front cover portion 63A and the rear cover portion 63C to each other is formed as integral parts of the outer cover 63.

As shown in Fig. 5, the front cover portion 63A includes a longitudinally-extending cover portion 63A1 which extends along the longitudinal direction of the vehicle body in front of and in the vicinity of the tank portion 51B of the radiator 51, and an inclined cover portion 63A2 which is inclined inwardly in the vehicle widthwise direction from a front end of the longitudinally-extending cover portion 63A1. In this constitution, as shown in Fig. 5, a distal end of the inner cover 62 (cover portion 62B) is covered with the inclined cover portion 63A2 and hence, a boundary between the inner cover 62 and the front cover portion 63A is not exposed to a front surface of the vehicle body. Accordingly, it is possible to avoid a situation where a traveling wind enters between the inner cover 62 and the front cover portion 63A and generates the traveling resistance.

Further, in this constitution, a slit S1 which makes the inside and the outside of the radiator cover 61 communicate with each other in the vehicle widthwise direction (see Fig. 5, Fig. 2) is formed between the front cover portion 63A and the inner cover 62 and a front surface of the tank portion 51B of the radiator 51. The slit S1 is formed into a vertically-elongated slit shape such that the slit S1 extends in the vertical direction along the front surface of the radiator 51 and extends between a front upper portion and a front lower portion where the outer cover 63 and the radiator 51 are connected to each other using bolts.

Due to such a constitution, when the vehicle body is inclined leftwardly or rightwardly, it is possible to vent a traveling wind through the slits S1 in the vehicle widthwise direction (the lateral direction). Accordingly, a manipulation force at the time of inclining the vehicle body leftwardly or rightwardly (hereinafter, referred to as an inclination manipulation force) can be decreased thus enhancing steerability of the vehicle body. Further, the slit S1 is formed as a vertically-elongated opening and hence, it is possible to efficiently vent a traveling wind present around the radiator cover 61 in the lateral direction thus efficiently enhancing steerability.

Further, in this constitution, as shown in Fig. 5, by arranging the front cover portion 63A more inside in the vehicle widthwise direction than the tank portion 51B of the radiator 51, a stepped portion 65 (a step indicated by symbol X in Fig. 5) is formed between the front cover portion 63A and the side portion of the radiator 51. Accordingly, a traveling wind from a front side of the vehicle body smoothly flows rearwardly along the longitudinally-extending cover portion 63A1 of the front cover portion 63A and, thereafter, impinges on the front surface of the tank portion 51B of the radiator 51 so that a turbulent flow is generated by the stepped portion 65 between the front cover portion 63A and the tank portion 51B of the radiator 51 whereby the traveling wind can be peeled off. Due to such a constitution, an inclination manipulation force can be also decreased thus enhancing steerability.

Further, a front stepped portion 66 which is indented more inwardly in the vehicle widthwise direction than the opening portion 63B is formed in front of (upstream of) the opening portion 63B by the inclined cover portion 63A2 of the front cover portion 63A and hence, the peeling-off of a traveling wind can be also accelerated by the front stepped portion 66 thus enhancing the steerability.

The rear cover portion 63C includes a longitudinally-extending cover portion 63C1 which extends along the longitudinal direction of the vehicle body behind and in the vicinity of the tank portion 51B of the radiator 51, and the rear cover portion 63C includes a bent cover portion 63C2 which is bent inwardly in the vehicle widthwise direction from a front end of the longitudinally-extending cover portion 63C1 as an integral part thereof.

An inner edge of the bent cover portion 63C2 in the vehicle widthwise direction (hereinafter referred to as vehicle widthwise inner edge of the bent cover portion 63C2) is arranged in the vicinity of a rear end of the tank portion 51B of the radiator 51 and outside the rear end of the tank portion 51B of the radiator 51 in the vehicle widthwise direction. Accordingly, the rear cover portion 63C is, as a whole, positioned in the vicinity of the rear end of the tank portion 51B of the radiator 51 and outside the rear end of the tank portion 51B of the radiator 51 in the vehicle widthwise direction. Due to such arrangement, a rearwardly bulging portion 67 which bulges outwardly in the vehicle widthwise direction is formed behind (downstream of) the opening portion 63B by the side surface of the tank portion 51B and the rear cover portion 63C. Due to the formation of the rearwardly-bulging portion 67, as shown in Fig. 5, a turbulent flow can be generated also in a traveling wind which flows rearwardly along the side surface of the tank portion 51B thus peeling off the traveling wind. Also due to such a constitution, an inclination manipulation force can be decreased thus further enhancing steerability.

Further, in the rear cover portion 63C, a wind vent opening portion 63E which penetrates the rear cover portion 63C in the vehicle widthwise direction is formed behind the radiator 51 and within a vertical width of the opening portion 63B. Due to the formation of the opening portion 63E, a traveling wind which passes through the radiator 51 or a traveling wind which enters a space inside the rear cover portion 63C through the opening portion 63B can be smoothly vent to the outside of the vehicle.

As has been explained heretofore, in this embodiment, the radiator cover 61 includes the front cover portions 63A which extend in the longitudinal direction of the vehicle body in front of and in the vicinity of the opening portions 63B formed at the positions where the opening portions 63B overlap the radiator 51 as viewed in a side view, and the front cover portions 63A are arranged more inside in the vehicle widthwise direction than the side portions of the radiator 51 thus forming the stepped portions 65 between the front cover portions 63A and the side portions of the radiator 51 and hence, a traveling wind which flows around the radiator 51 from a front side of the vehicle body flows rearwardly along the front cover portions 63A and, thereafter, impinges on the side portions of the radiator 51 so that a turbulent flow is generated at the side portions of the radiator 51 whereby the traveling wind can be peeled off. Due to such a constitution, the radiator 51 can function as a traveling wind peeling-off member and hence, an inclination manipulation force at the time of inclining the vehicle body leftwardly or rightwardly can be decreased thus enhancing steerability.

Further, the front cover portion 63A includes the front stepped portion 66 which is indented more inwardly in the vehicle widthwise direction than the opening portion 63B and hence, the step between the front cover portion 63A and the side portion of the radiator 51 can be increased thus accelerating the peeling-off of a traveling wind whereby steerability can be efficiently enhanced.

Further, the radiator cover 61 includes the rear cover portions 63C which extend along the longitudinal direction of the vehicle body behind and in the vicinity of the opening portions 63B, and the rear cover portion 63C includes the rearwardly bulging portion 67 which bulges more outwardly in the vehicle widthwise direction than the side portion of the radiator 51 and hence, it is possible to peel off the traveling wind by generating a turbulent flow also by the rearwardly bulging portion 67. Accordingly, an inclination manipulation force can be decreased by making use of the radiator 51 thus further enhancing the steerability.

Further, in this motorcycle 1, the radiator 51 is arranged at a high position in the vicinity of the lower end of the head pipe 5 and hence, a traveling wind which flows along the sides of the vehicle body can be peeled off from the vehicle body at a high position by the radiator 51 and the radiator cover 61. In this case, the motorcycle 1 is inclined leftwardly or rightwardly by using ground contact points of the front wheel 3 and the rear wheel 4 as the references. Accordingly, although the higher a position where a traveling wind is peeled off from the vehicle body, the more a traveling wind which flows along the sides of the vehicle body acts on the vehicle body as a resistance force of the inclination manipulation, due to the constitution of this embodiment, a traveling wind is peeled off from the vehicle body at the high position in the vicinity of the lower end of the head pipe 5 and hence, it is possible to effectively decrease an inclination manipulation force. Further, as shown in Fig. 1, a position of the radiator 51 corresponds to a height of knees of the rider M as viewed in a side view and hence, it is also possible to reduce a traveling wind which impinges on the knees of the rider M.

Further, the rear cover portion 63C includes the wind vent opening portion 63E behind the opening portion 63B and within a vertical width of the opening portion 63B and hence, it is possible to smoothly vent a traveling wind which passes through the radiator 51 or a traveling wind which enters a space inside the rear cover portions 63C through the opening portions 63B to the outside of the vehicle.

Further, the slit S1 which extends vertically as viewed in a side view is formed between the front edge of the opening portion 63B and the front edge of the radiator 51 and hence, an inclination manipulation force can be decreased by the slit S1 while using the covers in front of the opening portions 63B formed in the radiator cover 61 (the cover portions 62B of the inner cover 62) as a wind guide plate for the radiator 51.

Further, the radiator cover 61 includes the rib portions 63D which pass outside the radiator 51 in the vehicle widthwise direction and connect the front cover portions 63A which are portions in front of the opening portions 63B and the rear cover portions 63C which are portions behind the opening portions 63B to each other and hence, the rigidity of the radiator cover 61 can be enhanced and, at the same time, the protection property of the radiator cover 61 which protects the radiator 51 can be enhanced.

A pair of left and right side trunks 71 is mountable on a rear portion of the motorcycle 1.

Fig. 6 is a left side view showing a mounting state of the side trunks 71 together with the constitution of the periphery of the side trunks 71. A fender cover 38 (see Fig. 1) is mounted on an outer side surface of the rear frame 8 of the motorcycle 1 in the vehicle widthwise direction. The fender cover 38 is positioned below the rear seat 22B and has a cover shape extending in the longitudinal direction as viewed in a side view, and an upper edge and a lower edge of the fender cover 38 are formed into a wave shape. Accordingly, in the fender cover 38, a pair of longitudinally arranged upper recessed portions 38A which is arranged longitudinally in a spaced-apart manner along the upper edge of the fender cover 38 and is indented toward the inside in the vehicle widthwise direction, and a pair of longitudinally arranged lower recessed portions 38B which is arranged longitudinally in a spaced-apart manner along the lower edge of the fender cover 38 and is indented toward the inside in the vehicle widthwise direction are formed.

In mounting the side trunk 71, the upper recessed portions 38A are used as escape portions for allowing the escapement of pawl portions 72 for hooking the side trunk 71, and the lower recessed portions 38B are used as escape portions for allowing the escapement of a link arm 73 for mounting the side trunk 71. Out of the pair of longitudinally arranged lower recessed portions 38B, the lower recessed portions 38B on a rear side are used as the escape portion for allowing the escapement of the link arm 73.

In this manner, by using the recessed portions 38A, 38B formed in the fender cover 38 which are indented toward the inside in the vehicle widthwise direction as spaces for arranging the pawl portions 72 and the link arm 73 for mounting the side trunk 71, the effective use of space can be realized and hence, it is possible to prevent the side trunk 71 from projecting toward the outside in the vehicle widthwise direction.

The above-mentioned embodiment merely exemplifies one mode of the present invention, and modifications and applications of the embodiment can be made without departing from the scope of the invention defined by the appended claims. For example, in the above-mentioned embodiment, the explanation has been made with respect to the case where the present invention is applied to the motorcycle 1 provided with the radiator 51 for cooling the water-cooled engine 2. However, the present invention is not limited to the motorcycle having the above-mentioned constitution, and may be applied to a motorcycle provided with a radiator for cooling a water-cooled power unit other than the engine 2.

Further, the application of the present invention is not limited to the motorcycle, and the present invention is broadly applicable to a saddle-ride-type vehicle. The saddle-ride-type vehicles include all types vehicles where a rider rides a vehicle body in a straddling manner, and include not only a motorcycle (including a bicycle with a prime mover) but also a three-wheeled vehicle or a four-wheeled vehicle which is classified into ATV (all terrain vehicles).

### [Description of Reference Numerals and Signs]

- 1:: motorcycle (saddle-ride type vehicle)
- 2:: engine (power unit)
- 51:: radiator
- 61:: radiator cover
- 63A:: front cover portion
- 63B, 63E:: opening portion
- 63C:: rear cover portion
- 63D:: rib portion
- 65:: stepped portion
- 66:: front stepped portion
- 67:: rearwardly bulging portion
- F:: vehicle body frame

## Claims

1. A saddle-ride type vehicle comprising:
a vehicle body frame (F),
a water-cooled power unit (2) which is supported on the vehicle body frame (F),
a radiator (51) which cools the power unit (2), wherein the radiator (51) comprises a side portion (51B), and
a radiator cover (61) which is arranged on the side portion (51B) of the radiator (51), the radiator cover (61) being provided with an opening portion (63B) at a position where the opening portion (63B) overlaps the radiator (51) as viewed in a side view, wherein
the radiator cover (61) includes a front cover portion (63A) which extends in the longitudinal direction of a vehicle body in front of and in the vicinity of the opening portion (63B), and
**characterized in that** the side portion (51B) protrudes more in the vehicle widthwise direction than the front cover portion (63A), and the front cover portion (63A) and the side portion (51B) form a stepped portion (65, X) in the vehicle widthwise direction.

2. The saddle-ride type vehicle according to claim 1, wherein the front cover portion (63A) has a stepped portion (66) which is indented more inwardly in the vehicle widthwise direction than the opening portion (63B).

3. The saddle-ride type vehicle according to claim 1 or 2, wherein the radiator cover (61) includes a rear cover portion (63C) which extends along the longitudinal direction of the vehicle body behind and in the vicinity of the opening portion (63B), and
the rear cover portion (63C) includes a bulging portion (67) which bulges more outwardly in the vehicle widthwise direction than the side portion of the radiator (51).

4. The saddle-ride type vehicle according to claim 3, wherein the rear cover portion (63C) includes a wind vent opening portion (63E) behind the opening portion (63B) and within a vertical width of the opening portion (63B).

5. The saddle-ride type vehicle according to any one of claims 1 to 4, wherein a slit (S1) which extends vertically as viewed in a side view is formed between a front edge of the opening portion (63B) and a front edge of the radiator (51).

6. The saddle-ride type vehicle according to any one of claims 1 to 5, wherein the radiator cover (61) includes a rib portion (63D) which passes outside the radiator (51) in the vehicle widthwise direction and connects the front cover portion (63A) in front of the opening portion (63B) and a portion behind the opening portion (63B) to each other.

## Patentansprüche

1. Fahrzeug vom Sattelfahrtyp, umfassend:
einen Fahrzeugkarosserierahmen (F),
ein wassergekühltes Aggregat (2), das auf dem Fahrzeugkarosserierahmen (F) bereitgestellt ist,
einen Kühler (51), der das Aggregat (2) kühlt, wobei der Kühler (51) ein Seitenbereich (51 B) umfasst, und
eine Kühlerabdeckung (61), die an dem Seitenbereich (51 B) vom Kühler (51) angebracht ist, wobei die Kühlerabdeckung (61) mit einem Öffnungsbereich (63B) an einer Position, an der der Öffnungsbereich (63B) den Kühler (51), von der Seite aus gesehen, überlappt, ausgestattet ist, wobei
die Kühlerabdeckung (61) einen vorderen Abdeckungsbereich (63A) umfasst, welcher sich in der longitudinalen Richtung einer Fahrzeugkarosserie, vor und in der Nähe des Öffnungsbereichs (63B), erstreckt, und
**dadurch gekennzeichnet ist, dass** der Seitenbereich (51 B) in Fahrzeugbreitenrichtung weiter als der vordere Abdeckungsbereich (63A) hervorsteht, und der vordere Abdeckungsbereich (63A) und der Seitenbereich (51 B) in Fahrzeugbreitenrichtung einen abgestuften Bereich (65, X) bilden.

2. Fahrzeug vom Sattelfahrtyp nach Anspruch 1, wobei der vordere Abdeckungsbereich (63A) einen abgestuften Bereich (66) hat, der in der Fahrzeugbreitenrichtung weiter innen eingerückt ist, als der Öffnungsbereich (63B).

3. Fahrzeug vom Sattelfahrtyp nach Anspruch 1 oder 2, wobei die Kühlerabdeckung (61) einen hinteren Abdeckungsbereich (63C) umfasst, welches sich in longitudinaler Richtung der Fahrzeugkarosserie hinter und in der Nähe des Öffnungsbereichs (63B) erstreckt, und
der hintere Abdeckungsbereich (63C) einen sich wölbenden Bereich (67) umfasst, welcher sich in Fahrzeugbreitenrichtung weiter als der Seitenbereich des Kühlers (51) wölbt.

4. Fahrzeug vom Sattelfahrtyp nach Anspruch 3, wobei der hintere Abdeckungsbereich (63C) einen Windentlüftungsöffnungsbereich (63E), hinter dem Öffnungsbereich (63B) und innerhalb einer vertikalen Breite des Öffnungsbereichs (63B), umfasst.

5. Fahrzeug vom Sattelfahrtyp nach einem der Ansprüche 1 bis 4, wobei ein Schlitz (S1), der sich seitlich gesehen vertikal erstreckt, zwischen einem vorderen Rand des Öffnungsbereichs (63B) und einem vorderen Rand des Kühlers (51) gebildet ist.

6. Fahrzeug vom Sattelfahrtyp nach einem der Ansprüche 1 bis 5, wobei die Kühlerabdeckung (61) einen Rippenbereich (63D) umfasst, welcher außerhalb des Kühlers (51) in Fahrzeugbreitenrichtung passiert und den vorderen Abdeckungsbereich (63A) vor dem Öffnungsbereich (63B) mit einem Bereich hinter dem Öffnungsbereich (63B) miteinander verbindet.

## Revendications

1. Véhicule de type à selle comprenant :
une ossature de carrosserie de véhicule (F),
une unité de puissance refroidie à l'eau (2) qui est supportée sur l'ossature de carrosserie de véhicule (F),
un radiateur (51) qui refroidit l'unité de puissance (2), dans lequel le radiateur (51) comprend une portion de côté (51B), et
un cache-radiateur (61) qui est agencé sur la portion de côté (51B) du radiateur (51), le cache-radiateur (61) étant pourvu d'une portion d'ouverture (63B) à une position où la portion d'ouverture (63B) chevauche le radiateur (51) dans une vue de côté, dans lequel
le cache-radiateur (61) comporte une portion de cache avant (63A) qui s'étend dans la direction longitudinale d'une carrosserie de véhicule devant et à proximité de la portion d'ouverture (63B), et
**caractérisé en ce que** la portion de côté (51B) fait davantage saillie dans la direction de la largeur du véhicule que la portion de cache avant (63A), et la portion de cache avant (63A) et la portion de côté (51B) forment une portion étagée (65, X) dans la direction de la largeur du véhicule.

2. Véhicule de type à selle selon la revendication 1, dans lequel la portion de cache avant (63A) a une portion étagée (66) qui est davantage indentée vers l'intérieur dans la direction de la largeur du véhicule que la portion d'ouverture (63B).

3. Véhicule de type à selle selon la revendication 1 ou 2, dans lequel le cache-radiateur (61) comporte une portion de cache arrière (63C) qui s'étend le long de la direction longitudinale de la carrosserie de véhicule derrière et à proximité de la portion d'ouverture (63B), et
la portion de cache arrière (63C) comporte une portion de renflement (67) qui renfle davantage vers l'extérieur dans la direction de la largeur du véhicule que la portion de côté du radiateur (51).

4. Véhicule de type à selle selon la revendication 3, dans lequel la portion de cache arrière (63C) comporte une portion d'ouverture d'aération au vent (63E) derrière la portion d'ouverture (63B) et au sein d'une largeur verticale de la portion d'ouverture (63B).

5. Véhicule de type à selle selon l'une quelconque des revendications 1 à 4, dans lequel une fente (S1) qui s'étend à la verticale dans une vue de côté est formée entre un bord avant de la portion d'ouverture (63B) et un bord avant du radiateur (51).

6. Véhicule de type à selle selon l'une quelconque des revendications 1 à 5, dans lequel le cache-radiateur (61) comporte une portion de nervure (63D) qui passe à l'extérieur du radiateur (51) dans la direction de la largeur du véhicule et relie la portion de cache avant (63A) devant la portion d'ouverture (63B) et une portion derrière la portion d'ouverture (63B) l'une à l'autre.
